# EUROPEAN PATENT APPLICATION

(11) **EP 4 793 745 A1**
(43) Date of publication of application: **19.08.2026**
(21) Application number: 26152417.7
(22) Date of filing: 16.01.2026
(51) Int. Cl.: G06F 3/048, G06F 9/451, G09G 5/14

(54) **METHOD, APPARATUS, DEVICE FOR DISPLAY PROCESSING, MEDIUM AND PRODUCT**

(30) Priority: 17.02.2025 CN 202510174061
(71) Applicant: Beijing Zitiao Network Technology Co., Ltd., Beijing 100190 (CN)
(72) Inventor: Kunpeng, Xu, Beijing, 100028 (CN)
(74) Representative: Marks & Clerk LLP

(57) **Abstract**

According to embodiments of the disclosure, a method, an apparatus, a device, a medium, and a product for display processing are provided. The method includes: determining a plurality of rendering layers to be rendered on a display screen, each rendering layer corresponding to at least a partial interface area in an application interface to be displayed; in response to a number of the plurality of rendering layers being greater than a threshold number, determining a respective priority of each of the plurality of rendering layers, the threshold number indicating an upper limit of a number of rendering layers that may be rendered within a predetermined period; performing rendering on the plurality of rendering layers within the predetermined period based on the respective priority of each of the plurality of rendering layers to obtain a rendering result; and presenting the rendering result on the display screen.

## Description

### FIELD

Example embodiments of the present disclosure generally relate to the field of computers, and in particular, to a method, an apparatus, a device for display processing, and a computer-readable storage medium.

### BACKGROUND

With the popularization of intelligent terminal devices and the rapid development of mobile Internet, modern computing terminals are evolving from a traditional single-task mode to a multitask and multi-window parallel processing mode. Especially in terminal devices such as extended reality (XR) devices, smart phones, tablet computers, etc., with the increase of display screens, users' requirements for parallel running of multiple applications and cross-window interaction is increasing day by day. Parallel running and display of multiple windows and multiple tasks require more efficient resource management and display processing strategies to ensure smooth user experience.

### SUMMARY

In a first aspect of the present disclosure, a method for display processing is provided. The method includes: determining a plurality of rendering layers to be rendered on a display screen, each rendering layer corresponding to at least part of interface area in an application interface to be displayed; determining, in response to the number of the plurality of rendering layers being greater than a threshold number, respective priorities of the plurality of rendering layers, the threshold number indicating an upper limit of the number of rendering layers that are allowed to be rendered within a predetermined period; performing rendering on the plurality of rendering layers within the predetermined period based on the respective priorities of the plurality of rendering layers to obtain a rendering result; and presenting the rendering result on the display screen.

In a second aspect of the present disclosure, an apparatus for display processing is provided. The apparatus includes: a rendering layer determining module configured to determine a plurality of rendering layers to be rendered on a display screen, each rendering layer corresponding to at least part of interface area in an application interface to be displayed; a priority determining module configured to determine, in response to the number of the plurality of rendering layers being greater than a threshold number, respective priorities of the plurality of rendering layers, the threshold number indicating an upper limit of the number of rendering layers that are allowed to be rendered within a predetermined period; a rendering module configured to perform rendering on the plurality of rendering layers within the predetermined period based on the respective priorities of the plurality of rendering layers to obtain a rendering result; and a presenting module configured to present the rendering result on the display screen.

In a third aspect of the present disclosure, an electronic device is provided. The electronic device includes at least one processor; and at least one memory, the at least one memory being coupled to the at least one processor and storing instructions for execution by the at least one processor. The instructions, when executed by the at least one processor, cause the electronic device to perform the method of the first aspect.

In a fourth aspect of the present disclosure, a computer-readable storage medium is provided. The computer-readable storage medium has computer-executable instructions stored thereon, the computer-executable instructions being executable by a processor to implement the method of the first aspect.

In a fifth aspect of the present disclosure, a computer-executable instruction product is provided. The computer-executable instruction product is tangibly stored in a computer storage medium and includes computer-executable instructions that, when executed by a device, cause the device to perform the method of the first aspect.

It would be appreciated that the content described in this Summary section is neither intended to limit key or essential features of embodiments of the present disclosure, nor is it intended to limit the scope of the present disclosure. Other features of the present disclosure will be easier to be understood through the following description.

### BRIEF DESCRIPTION OF THE DRAWINGS

The above and other features, advantages and aspects of various embodiments of the present disclosure will become more apparent in combination with the drawings and with reference to the following detailed description. In the drawings, the same or similar reference symbols refer to the same or similar elements, where:
Fig. 1 illustrates a schematic diagram of an example environment in which embodiments of the present disclosure may be implemented;
Fig. 2 illustrates a flowchart of a process for display processing according to some embodiments of the present disclosure;
Fig. 3 illustrates a schematic diagram of a system for display processing according to some embodiments of the present disclosure;
Fig. 4 illustrates a schematic structural block diagram of an apparatus for display processing according to some embodiments of the present disclosure; and
Fig. 5 illustrates a block diagram of an electronic device in which one or more embodiments of the present disclosure may be implemented.

### DETAILED DESCRIPTION

Embodiments of the present disclosure will be described in more detail below with reference to the drawings. Although some embodiments of the present disclosure are shown in the drawings, it would be appreciated that the present disclosure may be implemented in various forms and should not be construed as limited to embodiments set forth herein. On the contrary, these embodiments are provided for a more thorough and complete understanding of the present disclosure. It would be appreciated that the drawings and embodiments of the present disclosure are only for illustrative purposes, and are not intended to limit the protection scope of the present disclosure.

In the description of the embodiments of the present disclosure, the term "include/comprise" and similar terms thereto should be understood as open-ended inclusions, that is, "include/comprise but not limited to". The term "based on" should be understood as "at least partially based on". The term "one embodiment" or "this embodiment" should be understood as "at least one embodiment". The term "some embodiments" should be understood as "at least some embodiments". Other definitions, either explicit or implicit, may also be included below.

Herein, unless explicitly stated, performing a step "in response to A" does not mean that the step is performed immediately after "A", but may include one or more intermediate steps.

It would be appreciated that the data involved in the technical solution (including but not limited to the data itself, acquisition or use of the data) should comply with requirements of corresponding laws, regulations and related rules.

It would be appreciated that before using the technical solutions disclosed in various embodiments of the present disclosure, the user should be informed of the type, range of use, use scenarios, etc., of personal information involved in the present disclosure and the authorization of the user should be obtained through appropriate means in accordance with relevant laws and regulations.

For example, in response to receiving an active request from the user, prompt information is sent to the user to clearly inform the user that the requested operation will require acquisition and use of the user's personal information, so that the user may personally choose, based on the prompt information, whether to provide the personal information to software or hardware, such as an electronic device, an application, a server or a storage medium, that performs the operations of the technical solution of the present disclosure.

As an optional but non-restrictive implementation, in response to receiving the active request from the user, the prompt information may be sent to the user in the form of, for example, a pop-up window, in which the prompt information may be presented in text. Furthermore, the pop-up window may also carry a selection control for the user to choose whether to "agree" or "disagree" to provide the personal information to the electronic device.

It would be appreciated that the above process of notifying and obtaining user authorization is only illustrative, and does not limit the implementations of the present disclosure. Other ways that satisfy the relevant laws and regulations may also be applied in the implementations of the present disclosure.

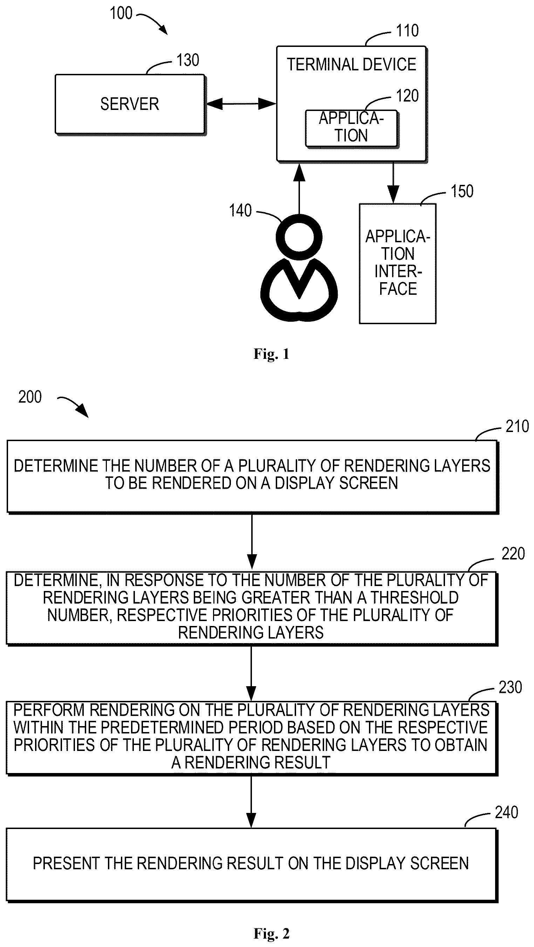

Fig. 1 illustrates a schematic diagram of an example environment 100 in which embodiments of the present disclosure may be implemented. In this example environment 100, an application 120 is installed on a terminal device 110. A user 140 may interact with the application 120 via the terminal device 110 and/or an attachment device of the terminal device 110. The application 120 may be a content presentation application (e.g., a video playback application), an online shopping application, or any other suitable application.

In the environment 100 of Fig. 1, if the application 120 is active, the terminal device 110 may present an application interface 150 of the application 120. The application interface 150 may include various types of user interfaces that may be provided by the application 120. The application 120 may provide a content viewing function to view various types of content posted in the application 120. Through corresponding pages, the application 120 may provide various types of online content to the user 140. Embodiments of the present disclosure are not intended to limit the specific functions of the application and the presented content. The application may be activated to run via an appropriate triggering way, such as clicking or selecting an application icon. Note that although a single application is shown in the figure, a plurality of applications may actually be installed and run on the terminal device 110.

In some embodiments, the terminal device 110 communicates with a server 130 to implement the provision of services of the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/video camera, a positioning device, a television receiver, a radio broadcast receiver, an e-book device, a gaming device, or any combination thereof, including the accessories and peripherals of these devices, or any combination thereof. In some embodiments, the terminal device 110 may also support any type of interface for the user (such as "wearable" circuitry, etc.). The server 130 may be various types of computing systems/servers that may provide computing power, including but not limited to mainframes, edge computing nodes, computing devices in cloud environments, and so on.

It would be appreciated that the structures and functions of various elements in the environment 100 are described for example purposes only, without suggesting any limitation to the scope of the present disclosure.

In a traditional terminal graphics rendering and displaying manner, each application occupies rendering resources separately. A user interface of an application may have multiple rendering layers, but usually does not exceed a threshold that may be allowed by a graphics processing unit (GPU). Therefore, in the case of single-application display, the GPU has sufficient rendering resources, and all rendering layers may be rendered smoothly within a vertical synchronization (Vsync) time.

The Vsync time (also referred to as a Vsync period) usually refers to a time interval between two screen refreshes of a display device (e.g., a display screen). It directly affects the time budget and task scheduling of the rendering system, especially in devices that support simultaneous display of multiple application interfaces.

With the popularization of intelligent terminal devices and the development of mobile Internet, terminal devices such as XR devices, personal computers (PC), tablets, smart phones, etc., have evolved from a single-task mode to an environment supporting parallel running of multiple applications. For example, as a new type of spatial computing platform, the XR device supports simultaneous launching of multiple application interfaces in a three-dimensional space. Users may launch multiple application interfaces (such as a browser, a document editor, a schedule manager, etc.) in a device with a large display screen (e.g., an XR device), and run mixed reality (MR) applications (such as virtual collaboration, mixed reality conference, etc.) on this basis. In addition, terminal devices such as PCs, tablets, smart phones, etc. also face similar needs. For example, users may need to display multiple application interfaces such as a video player, a game, an office software, etc. on a screen at the same time through ways such as split-screen or small window.

In addition, modern display devices (such as XR devices and high-refresh-rate displays) are highly dependent on processor resources. In particular, XR devices usually require a refresh rate of 90 Hz, 120 Hz or higher to avoid dizziness and ensure display effects. If each application independently occupies a rendering layer, the processor needs to simultaneously process rendering tasks of multiple rendering layers. In this case, too many rendering layers may need to be refreshed on the screen, resulting in rendering of all rendering layers not able to be completed within one vertical synchronization time. This may lead to problems such as frame rate drop, picture freeze, blooming, tearing, etc., which affects the user experience.

To solve the above problems, manual optimization is performed conventionally to ensure the display effect and smooth running of the application. For example, by reducing non-critical graphic elements, unnecessary rendering layers are reduced, or by reducing dynamically updated rendering layers, the load on the GPU is reduced. However, this way still requires manual adjustment by developers. If the system load changes (for example, the user suddenly opens multiple application interfaces), this way may not dynamically adapt to the change of system resource load. Therefore, a system-level display processing solution is desired to avoid problems such as display abnormalities caused by overloading of processing units by automatically optimizing the allocation of rendering layers in a multi-window and multi-application environment.

In view of this, an improved solution for display processing is proposed according to embodiments of the present disclosure. The solution includes: first, determining a plurality of rendering layers to be rendered on a display screen, each rendering layer corresponding to at least part of interface area in an application interface to be displayed. If the number of the plurality of rendering layers is greater than a threshold number, respective priorities of the plurality of rendering layers are determined, the threshold number indicating an upper limit of the number of rendering layers that may be rendered within a predetermined period. Moreover, rendering is performed on the plurality of rendering layers within the predetermined period based on the respective priorities of the plurality of rendering layers to obtain a rendering result; and finally, the rendering result is presented on the display screen.

In this way, through intelligent management and scheduling of the plurality of rendering layers, the allocation of rendering resources is optimized, ensuring the smooth running of the system in a multi-interface and multi-task environment. In addition, in the rendering process, dynamic adjustment is performed based on the priorities of the rendering layers, to ensure that an interface with a high priority obtains sufficient rendering resources and all rendering layers are rendered within the predetermined period. In this way, problems of display abnormalities such as freeze, blooming or tearing are avoided, ensuring that the user experiences a smooth and clear display effect in multi-interface and multi-task operations.

Some example embodiments of the present disclosure will be described below with continued reference to the drawings. Furthermore, in the following, example embodiments will be mainly described with respect to the terminal device 110.

Fig. 2 illustrates a flowchart of a process 200 of display processing according to some embodiments of the present disclosure. The process 200 may be implemented at the terminal device 110. The process 200 is described below with reference to Fig. 1.

At block 210, the terminal device 110 determines a plurality of rendering layers to be rendered on a display screen. Each rendering layer corresponds to at least part of interface area in an application interface 150 to be displayed.

The display screen refers to a device or area for displaying the display content of the terminal device 110. The display screen may be integrated in the terminal device 110 or an external device connected with the terminal device 110. The display screen may include a physical display device or a virtual projection display (for example, for an XR device).

The rendering layer may also be understood as a display layer or an image layer, with functions to manage rendering of a plurality of application interfaces or interface elements in a layered manner. The rendering layers mainly come from the application 120 in the terminal device 110, i.e., the application interface of each application 120 may have one or more rendering layers. The application interface is also referred to as an application window, or a window. In an environment where a plurality of application interfaces are presented on the display screen, the application interfaces of different applications 120 may occupy different display areas of the display screen, depending on the display positions and active states of the application interfaces. After each rendering layer is rendered, the rendering result thereof will correspond to at least part of interface area in the application interface to be displayed, corresponding to a part of content of the application interface 150. The display content corresponding to the rendering layer may be an independent element (such as a background, a button, a scrolling area) of an application interface, or a window of the entire application interface.

In some embodiments, different application interfaces usually correspond to different rendering layers. For example, a launcher application itself occupies one rendering layer. After multiple applications are launched (such as a video application, an office application, etc.), each application may create one or more rendering layers respectively. If a certain application supports multi-interface display (for example, a browser application may open multiple tabs or sub-windows), each application interface may also correspond to a different rendering layer.

In some embodiments, the rendering layers may not be strictly divided according to the applications, and an application interface may also be internally divided into multiple rendering layers. For example, a background layer and an interaction layer in a game application interface, such as a handle, a user interface (UI) control, a game character layer, etc. may correspond to one rendering layer respectively. This means that an application interface may correspond to multiple rendering layers. The specific number of the plurality of rendering layers to be rendered on the display screen may depend on factors such as the number of launched applications, the interface complexity of the applications, and a specific display strategy.

In some embodiments, the terminal device 110 may determine a rendering layer set of the application interface to be displayed on the display screen. Then, the terminal device 110 determines, based on position information of respective rendering layers on the display screen, a plurality of rendering layers within a field of view of a user on the display screen from the rendering layer set for rendering. That is, for all currently opened application interfaces, some rendering layers may not need to be rendered, and therefore only rendering of the plurality of rendering layers within the field of view of the user on the display screen may be considered. The terminal device 110 may determine the plurality of rendering layers within the field of view of the user as the plurality of rendering layers to be rendered. The rendering content corresponding to a rendering layer, of which the center point or main part is outside the field of view of the user, is not easily perceived or seen by the user. Therefore, it is not necessary to render and submit it, thereby reducing unnecessary computing and resource load.

The field of view (FOV) refers to an area that the user 140 may see on a display device (such as a display screen of an XR device, a PC displayer, etc.). For example, in the XR device, the FOV is an optical framing range of the XR device, which is determined by hardware attributes (such as a lens, an optical module, a screen, etc.) of the device.

As an example, the terminal device 110 may determine, based on the position information of the rendering layer, whether the rendering layer is within the FOV. Each rendering layer has its coordinate information (such as X/Y/Z coordinates) and size information (such as width and height). These information may be used to determine the position of at least part of area in the application interface corresponding to the rendering layer on the display screen, thereby determining whether these rendering layers belong to the range of the FOV.

Continuing to refer to Fig. 2, at block 220, in response to the number of the plurality of rendering layers to be rendered being greater than the threshold number, the terminal device 110 determines respective priorities of the plurality of rendering layers.

In a multi-task and multi-interface use scenario, the user 140 may trigger a plurality of applications or application interfaces. If the user 140 does not close the unnecessary applications or application interfaces, their corresponding rendering layers may continue to exist on the display screen, causing the number of rendering layers to accumulate. The terminal device 110 needs to simultaneously process a plurality of application interfaces and corresponding rendering layers. These rendering layers will occupy computing resources in the rendering pipeline of the processor to render their corresponding display content. If the number of these rendering layers exceeds the threshold number, the terminal device 110 may not be able to complete rendering tasks of all rendering layers within the predetermined period.

In some embodiments, the threshold number (represented as Layer_Max) indicates an upper limit of the number of rendering layers that may be rendered within the predetermined period. Layer_Max is an upper limit value, representing the maximum number of rendering layers that the device may effectively process and complete rendering within a predetermined time range.

In some embodiments, the predetermined period may be a VSync time of the display screen. VSync refers to a synchronization signal sent after the display screen completes one vertical refresh cycle. This signal is used to synchronize the frame rendering of the GPU and the refresh rate of the display. Each time a vertical refresh is triggered, the display screen will start to draw a new frame of image. The Vsync time (i.e., the vertical refresh cycle) refers to a time interval from the completion of displaying of a current frame of image to the start of refreshing of a next frame. The VSync time is usually related to the refresh rate of the display screen. The Vsync time determines how many times the display may refresh the image in one second. For example, the Vsync time of a display screen with a refresh rate of 60 Hz may be 16.67 milliseconds (i.e., refreshing the image 60 times per second).

In some embodiments, the threshold number is determined based on the predetermined period and capability information of a processing unit configured to perform the rendering. The predetermined period (i.e., the Vsync time) determines the time available for each rendering task. The display content (such as a window, a UI, a background image, etc.) corresponding to each application needs to be rendered through the rendering layer and combined into a final image through a synthesizer. It is usually desired to complete rendering of all rendering layers simultaneously within the predetermined period. If the Vsync time period is short (for example, for a high-refresh-rate display), the rendering time of each rendering layer will be more tense.

The processing unit that executes rendering may be a GPU and/or any other processing unit with rendering capability. The capability information of the processing unit may also be understood as the performance of the processing unit, which determines how many rendering tasks the terminal device 110 may complete within the predetermined period. If the performance of the processing unit is good, the predetermined Layer_Max may be higher, indicating that more rendering layers may be rendered within one Vsync period. If the performance of the processing unit is weak, Layer_Max will be lower to avoid exceeding the processing capability of the processing unit, ensuring that the rendering task of each rendering layer is completed within a specified time.

In some embodiments, the capability information considered for the processing unit may indicate a data transfer speed and/or a throughput of the processing unit. The data transfer speed of the processing unit usually refers to the speed of data transfer between the video memory and the processing unit. A higher data transfer rate helps to improve the data transfer capability of the processing unit during graphics rendering. The throughput includes, for example, indicators such as a pixel filling rate and a texture filling rate that may determine a generation speed of each frame of content. Alternatively or in addition, the capability information may further indicate other indicators related to graphics rendering and display, such as shading capability, video memory bandwidth, parallel computing power, rendering latency, etc. In some examples, if the data transfer speed and/or throughput of the processing unit is higher, the value of Layer_Max may be determined to be higher.

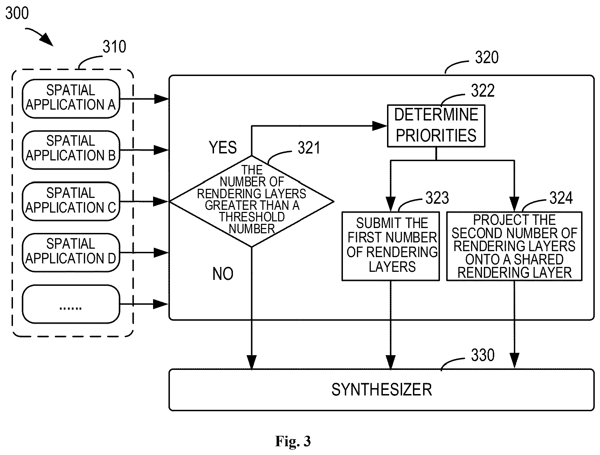

As an example, Fig. 3 illustrates a schematic diagram of a system 300 for display processing according to some embodiments of the present disclosure. The system 300 may be implemented at the terminal device 110.

Referring to Fig. 3, the system 300 determines, based on launched spatial applications 310, the number of a plurality of rendering layers to be rendered on a display screen.

The spatial applications 310 here may be different applications or application interfaces. For example, a plurality of applications in the terminal device 110 may be launched simultaneously, such as a media playback application, a browser application, a game application, etc., or an application launches a plurality of interfaces that need to be displayed simultaneously on the display screen. The spatial applications 310 may also be different application instances in the XR device. For example, on the XR device, the spatial application 310 may represent a virtual screen, an interactive interface or a UI component. It is possible to request rendering resources by requesting at least one rendering layer corresponding to the spatial application 310 from the application management module 320, to obtain a corresponding rendering result to be presented on the display screen.

At block 321, the application management module 320 determines whether the number of rendering layers that need to be rendered is greater than a threshold number. If the number of rendering layers that need to be rendered is greater than the threshold number, it means that the number of rendering layers that need to be rendered exceeds the processing capability of the processing unit. This indicates that the processing unit may not be able to render all rendering layers within one Vsync time, which may lead to picture update lag, and problems occur, such as freeze, blooming, tearing, or the like. In this case, the application management module 320 may proceed to block 322. At block 322, the application management module 320 determines respective priorities of the plurality of rendering layers.

In an environment where a plurality of application interfaces are presented on the display screen, the application interfaces of different applications may occupy different display areas of the display screen, depending on the display positions and active states of the application interfaces. The application interfaces may be overlapped or occluded with each other, and some rendering layers may be occluded or covered by other rendering layers. In order to optimize rendering efficiency and reasonably allocate computing resources, the application management module 320 may determine the priorities of various rendering layers, and then determine rendering strategies for rendering layers with different priorities.

In some embodiments, the application management module 320 may determine the respective priorities of the plurality of rendering layers based on position information corresponding to the plurality of rendering layers on the display screen. Alternatively or in addition, the application management module 320 may determine the respective priorities of the plurality of rendering layers based on respective active states of application interfaces corresponding to the plurality of rendering layers.

In some embodiments, the position information corresponding to the rendering layer on the display screen refers to position information corresponding to at least part of interface area in the application interface corresponding to the plurality of rendering layers on the display screen respectively. The position information of the rendering layer may be used to determine a presentation position or a display area of at least part of interface area in the application interface corresponding to the rendering layer. The position information may include a size of the application interface and coordinates on the display screen.

In some embodiments, the application management module 320 may determine, based on the position information of respective rendering layers in the plurality of rendering layers, respective degrees of occlusion of at least part of interface area corresponding to the respective rendering layers on the display screen. The degree of occlusion refers to a degree to which at least part of interface area corresponding to the rendering layer is occluded by at least part of interface area corresponding to other rendering layer(s) on the display screen. As an example, the application management module 320 may obtain a continuous proportional number by calculating the proportion of the occluded area of the interface area, to represent the degree of occlusion. Alternatively or in addition, the application management module 320 may also use a discretized level (such as high, medium, low, etc.) to represent the degree of occlusion.

As an example, the application management module 320 may determine the position of various rendering layers on the display screen based on the coordinates and size information of the rendering layer. Then, based on the relative position of each rendering layer to other rendering layers, the ratio of the area occluded by other windows on the screen to the total area is calculated, thereby determining the degree of occlusion of the rendering layer.

If a rendering layer has a lower degree of occlusion, it may be considered more important to the user experience and should be rendered first. For example, it is necessary to ensure high-quality rendering of a foreground application interface, a UI component being interacted with, etc. On the other hand, if a rendering layer is mostly covered by other application interfaces (high degree of occlusion), rendering the rendering layer completely and independently may lead to a waste of computing resources. The application management module 320 may reduce the priorities of these rendering layers to reduce unnecessary rendering computation.

In some embodiments, a first rendering layer in the plurality of rendering layers has a first degree of occlusion and/or a first active state, and a second rendering layer in the plurality of rendering layers has a second degree of occlusion and/or a second active state, the first degree of occlusion being greater than the second degree of occlusion, and an activity degree indicated by the first active state being lower than an activity degree indicated by the second active state, and a first priority of the first rendering layer is determined to be lower than a second priority of the second rendering layer.

As an example, if a first rendering layer in the plurality of rendering layers has a first degree of occlusion, and a second rendering layer in the plurality of rendering layers has a second degree of occlusion, and the first degree of occlusion is greater than the second degree of occlusion, the application management module 320 may determine that a first priority of the first rendering layer is lower than a second priority of the second rendering layer. The priority determination of the rendering layers may be inferred similarly.

As another example, if the first rendering layer and the second rendering layer in the plurality of rendering layers have the same degree of occlusion (for example, these rendering layers are all completely visible or have the same proportion of occlusion), the application management module 320 may further determine their priorities based on the active state. If the first rendering layer has a first active state, and the second rendering layer has a second active state, and an activity degree indicated by the first active state is lower than an activity degree indicated by the second active state, the application management module 320 may determine that a first priority of the first rendering layer is lower than a second priority of the second rendering layer. The active state information at least indicates a display sequence (a sequence in which the application interfaces corresponding to the rendering layers are launched or triggered), i.e., a recently opened application interface is considered to be of most concern to the current user and should have a higher priority.

By determining the priority of the rendering layer, the allocation of rendering resources is effectively optimized, ensuring that key content is rendered first, and improving the efficiency of display processing. Based on factors such as the visibility, the degree of occlusion and the active state of the rendering layer, an important interface in the current interaction or field of view of the user is rendered first, avoiding that rendering layers with low priorities occupy too many computing resources. In addition, based on the priority of the rendering layer, subsequent display processing may be dynamically adjusted, thereby improving the adaptability of the device to a multi-task environment and enabling the device to quickly respond to changes in the application interface.

The priority determination of the rendering layer is discussed above. Returning to Fig. 2, at block 230, the terminal device 110 performs rendering on the plurality of rendering layers within the predetermined period based on the respective priorities of the plurality of rendering layers to obtain a rendering result.

In some embodiments, the terminal device 110 divides the plurality of rendering layers into a first set of rendering layers and a second set of rendering layers based on the respective priorities of the plurality of rendering layers, the first set of rendering layers including a predetermined number of rendering layers. For example, in the case where the number of rendering layers exceeds the maximum number of rendering layers, the terminal device 110 may divide these rendering layers into different groups according to the priority, which respectively correspond to different rendering strategies. In this way, it is ensured that the hardware capability limit will not be exceeded when rendering the plurality of rendering layers.

In some embodiments, the terminal device 110 may determine the predetermined number of rendering layers with the priorities in a high order in the plurality of rendering layers as the first set of rendering layers. For example, the terminal device 110 determines first (Layer_Max-1) rendering layers with highest priorities in a priority sequence as the first set of rendering layers. The first set of rendering layers may be rendering layers that correspond to the application interface being interacted with by the user or a UI component that needs to be displayed in the foreground and that have higher priorities and thus may be allocated more rendering resources.

In some other embodiments, the terminal device 110 determines remaining rendering layers in the plurality of rendering layers as the second set of rendering layers. For example, the terminal device 110 divides the remaining rendering layers with lower priorities into the second set of rendering layers. In some examples, if the first set of rendering layers includes (Layer_Max-1) rendering layers, the second set of rendering layers includes the remaining rendering layers in all rendering layers to be rendered. The second set of rendering layers may be rendering layers that are partially occluded and have lower priorities, and for which the computing cost may be reduced through optimization processing.

In some embodiments, the terminal device 110 obtains, within the predetermined period, a first number of first rendering results by performing rendering on display content corresponding to the first set of rendering layers in the predetermined number of independent rendering layers, respectively. Because the number of the first set of rendering layers is fixed, the first number may be equal to the number of the first set of rendering layers, i.e., the predetermined number, for example (Layer_Max-1).

As an example, returning to Fig. 3, at block 323, the application management module 320 may submit a predetermined number (for example, Layer_Max-1) of rendering layers in the first set of rendering layers to the synthesizer 330 for rendering. The display content corresponding to each rendering layer may be rendered independently in the rendering pipeline to ensure smooth display of its content. For example, the terminal device 110 may allocate corresponding rendering resources (such as an independent frame buffer) to each independent rendering layer. Then, by performing a standard rendering process on the display content corresponding to the (Layer_Max-1) rendering layers in each independent rendering layer, respectively, corresponding (Layer_Max-1) first rendering results are obtained. These independent rendering results may be cached in the synthesizer 330 for subsequent final image synthesis.

In some embodiments, the terminal device 110 determines a second rendering result by performing rendering on display content corresponding to the second set of rendering layers in a shared rendering layer within the same predetermined period.

As an example, referring to Fig. 3, at block 324, the terminal device 110 does not allocate an independent rendering resource to each of a second number of rendering layers with lower priorities, but projects the second number of rendering layers into one shared rendering layer (referred to as an EyeBuffer Projection layer) and submits them to the synthesizer 330 as one rendering layer.

The shared rendering layer may be understood as a base rendering layer (base layer), which may be used to combine and carry a plurality of rendering layers with lower priorities, to reduce the number of independently rendered rendering layers, thereby improving rendering efficiency. As a base rendering layer, the shared rendering layer may always exist, ensuring that there is a base layer available for rendering even if only one application is running. The interface area corresponding to the shared rendering layer may be the display area of the entire display screen, which is used to display the base background or combine a plurality of rendering layers with low priorities.

In some examples, the display content corresponding to the second number of the second set of rendering layers is superimposed onto the shared rendering layer by projection. For example, the display content corresponding to the second set of rendering layers is mapped to a texture or a map and then projected onto the shared rendering layer. The size and position of the display content in the shared rendering layer remain unchanged, and the display content may still be displayed on the screen, except that it no longer occupies an independent rendering layer. The display content corresponding to the second number of second rendering layers is combined into the shared rendering layer and rendered as a whole to obtain one second rendering result. This process still involves the process of rendering computation, but the amount of computation is lower than that of independently rendering a plurality of rendering layers.

In some embodiments, the rendering result may include image data that is obtained after processing such as computation, shading, rasterization, etc., and that is used for synthesis and presentation on the display screen. The synthesizer 330 may determine the rendering result to be presented on the display screen based on the first number of first rendering results and the second rendering result. For example, the synthesizer 330 performs image layer synthesis on the first number of first rendering results and the second rendering result, and superimposes the rendering results of the plurality of rendering layers together according to a predetermined rule to generate the final rendering result.

Because the number of rendering layers submitted to the synthesizer never exceeds the threshold number, even if a plurality of applications or interfaces are launched simultaneously, the terminal device 110 may still complete rendering synthesis within the vertical refresh time. In this way, smooth display image output may be maintained, and problems such as freeze, blooming and tearing may be avoided.

Returning to Fig. 2, at block 240, the terminal device 110 presents the rendering result on the display screen.

As an example, the terminal device 110 may take the final rendering result from the synthesizer at each vertical refresh time to refresh the screen. Then, the terminal device 110 replaces the previous frame with the rendering result obtained from the synthesizer, to present the new rendered image on the display screen.

Continuing to refer to Fig. 3, as shown in Fig. 3, at block 321, if the application management module 320 determines that the number of the plurality of rendering layers is less than or equal to the threshold number, it may perform rendering on display content corresponding to various rendering layers in the plurality of rendering layers in an independent rendering layer, respectively, to obtain the rendering result.

As an example, the application management module 320 may submit the plurality of rendering layers to be rendered on the display screen to the synthesizer 330 in an independent occupy manner for rendering. The application management module 320 may render the display content corresponding to each rendering layer in the independent rendering layer, respectively, and obtain its corresponding rendering result. These rendering results may be cached in the synthesizer 330 for subsequent final image synthesis. The terminal device 110 may obtain the synthesized rendering result and present the rendering result on the display screen.

In conclusion, according to various embodiments of the present disclosure, by determining the priorities of various rendering layers and optimizing the rendering manner of rendering layers with a low priorities, the number of independent rendering layers may be reduced without limiting the number of opened application windows. In this way, the load of rendering on the screen may be effectively reduced. In this way, problems such as freeze, blooming, tearing, etc. caused by overloaded rendering may be avoided, thereby improving the user experience in a multi-window display environment.

### EXAMPLE APPARATUS AND DEVICE

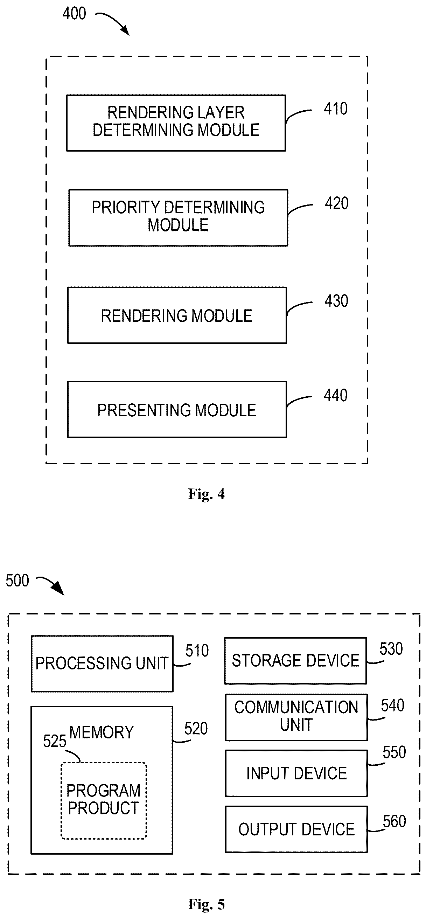

Fig. 4 illustrates a schematic structural block diagram of an apparatus 400 for display processing according to some embodiments of the present disclosure. For example, the apparatus 400 may be implemented or included in the terminal device 140. Various modules/components in the apparatus 400 may be implemented by hardware, software, firmware, or any combination thereof.

As shown in Fig. 4, the apparatus 400 includes a rendering layer determining module 410 configured to determine a plurality of rendering layers to be rendered on a display screen, each rendering layer corresponding to at least part of interface area in an application interface to be displayed; a priority determining module 420 configured to determine, in response to the number of the plurality of rendering layers being greater than a threshold number, respective priorities of the plurality of rendering layers, the threshold number indicating an upper limit of the number of rendering layers that are allowed to be rendered within a predetermined period; a rendering module 430 configured to perform rendering on the plurality of rendering layers within the predetermined period based on the respective priorities of the plurality of rendering layers to obtain a rendering result; and a presenting module 440 configured to present the rendering result on the display screen.

In some embodiments, the rendering layer determining module 410 is further configured to determine a rendering layer set of the application interface to be displayed on the display screen; determine, based on position information of respective rendering layers in the rendering layer set on the display screen, a plurality of rendering layers within a field of view of a user on the display screen from the rendering layer set; and determine the plurality of rendering layers within the field of view of the user as the plurality of rendering layers to be rendered.

In some embodiments, the priority determining module 420 is further configured to determine the respective priorities of the plurality of rendering layers based on at least one of the following: position information corresponding to the plurality of rendering layers on the display screen, respective active states of application interfaces corresponding to the plurality of rendering layers.

In some embodiments, the priority determining module 420 is further configured to determine, based on the position information of respective rendering layers in the plurality of rendering layers, respective degrees of occlusion of at least part of interface area corresponding to the respective rendering layers on the display screen; and determine the respective priorities of the plurality of rendering layers based on the degrees of occlusion and/or the active states of the respective rendering layers.

In some embodiments, a first rendering layer in the plurality of rendering layers has a first degree of occlusion and/or a first active state, and a second rendering layer in the plurality of rendering layers has a second degree of occlusion and/or a second active state, the first degree of occlusion being greater than the second degree of occlusion, and an activity degree indicated by the first active state being lower than an activity degree indicated by the second active state, and where a first priority of the first rendering layer is determined to be lower than a second priority of the second rendering layer.

In some embodiments, the rendering module 430 is further configured to divide the plurality of rendering layers into a first set of rendering layers and a second set of rendering layers based on the respective priorities of the plurality of rendering layers, the first set of rendering layers including a predetermined number of rendering layers; obtain, within the predetermined period, a first number of first rendering results by performing rendering on display content corresponding to the first set of rendering layers in the predetermined number of independent rendering layers respectively, and obtain a second rendering result by performing rendering on display content corresponding to the second set of rendering layers in a shared rendering layer; and determine the rendering result based on the first number of first rendering results and the second rendering result.

In some embodiments, the rendering module 430 is further configured to determine the predetermined number of rendering layers with the priorities in a high order in the plurality of rendering layers as the first set of rendering layers; and determine remaining rendering layers in the plurality of rendering layers as the second set of rendering layers.

In some embodiments, the rendering module 430 is further configured to determine the rendering result by synthesizing the first number of first rendering results and the second rendering result.

In some embodiments, the rendering module 430 is further configured to project the display content corresponding to the second set of rendering layers onto the shared rendering layer; and determine the second rendering result by rendering the display content in the shared rendering layer.

In some embodiments, the apparatus 400 is further configured to perform, in response to the number of the plurality of rendering layers being less than or equal to the threshold number, rendering, in an independent rendering layer, on display content corresponding to respective rendering layers in the plurality of rendering layers, to obtain a rendering result; and present the rendering result on the display screen.

The units and/or module included in the apparatus 400 may be implemented in various ways, including software, hardware, firmware, or any combination thereof. In some embodiments, one or more units and/or modules may be implemented using software and/or firmware, such as machine executable instructions stored on a storage medium. In addition to machine executable instructions or as an alternative, some or all units and/or modules in the apparatus 400 may be implemented at least partially by one or more hardware logic components. As an example, rather than a limitation, example types of hardware logic components that may be used include field programmable gate array (FPGA), application specific integrated circuit (ASIC), application specific standard production (ASSP), system on chip (SOC), complex programmable logic device (CPLD), and so on.

It would be appreciated that one or more steps in the above method may be performed by a suitable electronic device or a combination of electronic devices. Such an electronic device or a combination of electronic devices may include, for example, the terminal device 110 and/or the server 130 in Fig. 1.

Fig. 5 illustrates a block diagram of an electronic device 500 in which one or more embodiments of the present disclosure may be implemented. It would be appreciated that the electronic device 500 shown in Fig. 5 is merely an example, and should not constitute any limitation to the functions and scope of embodiments described herein. The electronic device 500 shown in Fig. 5 may include or be implemented as the terminal device 110 in Fig. 1 or the apparatus 400 in Fig. 4.

As shown in Fig. 5, the electronic device 500 is in the form of a general electronic device. The components of the electronic device 500 may include but not limited to one or more processors or processing units 510, a memory 520, a storage device 530, one or more communication units 540, one or more input devices 550 and one or more output devices 560. The processing unit 510 may be an actual or virtual processor and may execute various processes based on the programs stored in the memory 520. In a multi-processor system, a plurality of processing units execute computer executable instructions in parallel to improve the parallel processing capability of the electronic device 500.

The electronic device 500 typically includes a plurality of computer storage media. Such media may be any available medium accessible by the electronic device 500, including but not limited to volatile and non-volatile medium, and removable and non-removable medium. The memory 520 may be a volatile memory (for example, a register, a cache, a random access memory (RAM)), a non-volatile memory (such as a read-only memory (ROM), an electrically erasable programmable read-only memory (EEPROM), a flash memory), or certain combination thereof. The storage device 530 may be any removable or non-removable medium, and may include a machine readable medium such as a flash drive, a disk, or any other medium, which may be used to store information and/or data (such as training data for training) and may be accessed within the electronic device 500.

The electronic device 500 may further include additional removable/non-removable, volatile/non-volatile storage medium. Although not shown in Fig. 5, a disk driver for reading from or writing into removable and non-volatile disks (such as a "floppy disk"), and an optical disk driver for reading from or writing into removable and non-volatile optical disks may be provided. In these cases, each driver may be connected to the bus (not shown) by one or more data medium interfaces. The memory 520 may include a computer program product 525, which has one or more program modules configured to execute various methods or acts of various embodiments of the present disclosure.

The communication unit 540 implements communication with other electronic devices through the communication medium. Additionally, the functions of the components of the electronic device 500 may be implemented by a single computing cluster or a plurality of computing machines, which may communicate through communication connections. Therefore, the electronic device 500 may be operated in a networking environment using a logical connection with one or more other servers, a network personal computer (PC) or another network node.

The input device 550 may be one or more input devices, such as a mouse, a keyboard, a tracking ball, etc. The output device 560 may be one or more output devices, such as a display, a speaker, a printer, etc. The electronic device 500 may further communicate with one or more external devices (not shown) through the communication unit 540 as needed, the external devices such as a storage device, a display device, etc., communicate with one or more devices that enable the user to interact with the electronic device 500, or communicate with any devices (such as a network card, a modem, etc.) that enable the electronic device 500 to communicate with one or more other electronic devices. Such communication may be performed via input/output (I/O) interfaces (not shown).

According to an example implementation of the present disclosure, a computer-readable storage medium is provided, having computer executable instructions stored thereon, where the computer executable instructions are executed by a processor to implement the method described above. According to an example implementation of the present disclosure, a computer program product is further provided, the computer program product being tangibly stored on a non-transitory computer-readable medium and including computer executable instructions, and the computer executable instructions are executed by a processor to implement the method described above.

Various aspects of the present disclosure are described herein with reference to the flowcharts and/or block diagrams of the method, the apparatus, the device and the computer program product implemented according to the present disclosure. It would be appreciated that each block of the flowcharts and/or block diagrams, and combinations of various blocks in the flowcharts and/or block diagrams may be implemented by computer-readable program instructions.

These computer-readable program instructions may be provided to the processing unit of a general-purpose computer, a special-purpose computer, or other programmable data processing apparatus to produce a machine, such that when these instructions are executed by the processing unit of the computer or other programmable data processing apparatus, an apparatus for implementing the functions/acts specified in one or more blocks in the flowcharts and/or block diagrams is produced. These computer-readable program instructions may also be stored in a computer-readable storage medium, these instructions enable the computer, the programmable data processing apparatus and/or other devices to work in a specific manner, and thus the computer-readable medium storing the instructions includes a manufactured product, which includes instructions for implementing various aspects of the functions/acts specified in one or more blocks in the flowcharts and/or block diagrams.

The computer-readable program instructions may be loaded onto a computer, another programmable data processing apparatus, or other devices, such that a series of operations and steps are performed on the computer, the other programmable data processing apparatus, or the other devices to generate a computer-implemented process, such that the instructions executed on the computer, the other programmable data processing apparatus, or the other devices implement the functions/acts specified in one or more blocks in the flowcharts and/or block diagrams.

The flowcharts and block diagrams in the drawings show the possibly implemented architectures, functions and operations of the system, the method and the computer program product according to a plurality of implementations of the present disclosure. In this regard, each block in the flowchart or block diagram may represent a module, a program segment or a part of instructions, and the module, the program segment or the part of instructions includes one or more executable instructions for implementing the specified logical functions. In some alternative implementations, the functions marked in the blocks may also occur in an order different from that marked in the drawings. For example, two consecutive blocks may actually be performed substantially in parallel, or may sometimes also be performed in the reverse order, depending on the functions involved. It should also be noted that each block in the block diagrams and/or flowcharts, and the combinations of the blocks in the block diagrams and/or flowcharts may be implemented by a dedicated hardware-based system that executes specified functions or acts, or may be implemented by a combination of dedicated hardware and computer instructions.

Various implementations of the present disclosure have been described above, and the above description is an example and not exhaustive, and is not limited to the disclosed implementations. Without departing from the scope of the described implementations, many modifications and changes will be apparent to those of ordinary skilled persons in the art. The selection of terms used herein aims to best explain the principles of various implementations, the practical applications, or the improvements to the technologies in the market, or to enable other ordinary skilled persons in the art to understand various implementations disclosed herein.

## Claims

1. A method (200) of display processing, comprising:
determining (210) a plurality of rendering layers to be rendered on a display screen, each rendering layer corresponding to at least part of interface area in an application interface to be displayed;
determining (220), in response to the number of the plurality of rendering layers being greater than a threshold number, respective priorities of the plurality of rendering layers, the threshold number indicating an upper limit of the number of rendering layers that are allowed to be rendered within a predetermined period;
performing (230) rendering on the plurality of rendering layers within the predetermined period based on the respective priorities of the plurality of rendering layers to obtain a rendering result; and
presenting (240) the rendering result on the display screen.

2. The method (200) of claim 1, wherein determining (210) the plurality of rendering layers to be rendered on the display screen comprises:
determining a rendering layer set of the application interface to be displayed on the display screen;
determining, based on position information of respective rendering layers in the rendering layer set on the display screen, a plurality of rendering layers within a field of view of a user on the display screen from the rendering layer set; and
determining the plurality of rendering layers within the field of view of the user as the plurality of rendering layers to be rendered.

3. The method (200) of claim 1 or 2, wherein determining (220) the respective priorities of the plurality of rendering layers comprises:
determining the respective priorities of the plurality of rendering layers based on at least one of the following:
position information corresponding to the plurality of rendering layers on the display screen, or
respective active states of application interfaces corresponding to the plurality of rendering layers.

4. The method of (200) claim 3, wherein determining the respective priorities of the plurality of rendering layers comprises:
determining, based on the position information of respective rendering layers in the plurality of rendering layers, respective degrees of occlusion of at least part of interface area corresponding to the respective rendering layers on the display screen; and
determining the respective priorities of the plurality of rendering layers based on the degrees of occlusion and/or the active states of the respective rendering layers.

5. The method (200) of claim 4, wherein a first rendering layer in the plurality of rendering layers has a first degree of occlusion and/or a first active state, and a second rendering layer in the plurality of rendering layers has a second degree of occlusion and/or a second active state, the first degree of occlusion being greater than the second degree of occlusion, and an activity degree indicated by the first active state being lower than an activity degree indicated by the second active state, and
wherein a first priority of the first rendering layer is determined to be lower than a second priority of the second rendering layer.

6. The method (200) of any of claims 1 to 5, wherein performing (230) rendering on the plurality of rendering layers within the predetermined period based on the respective priorities of the plurality of rendering layers to obtain the rendering result comprises:
dividing the plurality of rendering layers into a first set of rendering layers and a second set of rendering layers based on the respective priorities of the plurality of rendering layers, the first set of rendering layers comprising a predetermined number of rendering layers;
obtaining, within the predetermined period, a first number of first rendering results by performing rendering on display content corresponding to the first set of rendering layers in the predetermined number of independent rendering layers respectively, and obtaining a second rendering result by performing rendering on display content corresponding to the second set of rendering layers in a shared rendering layer; and
determining the rendering result based on the first number of first rendering results and the second rendering result.

7. The method (200) of claim 6, wherein dividing the plurality of rendering layers into the first set of rendering layers and the second set of rendering layers comprises:
determining the predetermined number of rendering layers with the priorities in a high order in the plurality of rendering layers as the first set of rendering layers; and
determining remaining rendering layers in the plurality of rendering layers as the second set of rendering layers.

8. The method (200) of claim 6 or 7, wherein determining the rendering result based on the first number of first rendering results and the second rendering result comprises:
determining the rendering result by synthesizing the first number of first rendering results and the second rendering result.

9. The method (200) of any of claims 6 to 8, wherein obtaining the second rendering result by performing rendering on the display content corresponding to the second set of rendering layers in the shared rendering layer comprises:
projecting the display content corresponding to the second set of rendering layers onto the shared rendering layer; and
determining the second rendering result by rendering the display content in the shared rendering layer.

10. The method (200) of any of claims 1 to 9, wherein the threshold number is determined based on the predetermined period and capability information of a processing unit configured to perform rendering.

11. The method (200) of any of claims 1 to 10, further comprising:
performing, in response to the number of the plurality of rendering layers being less than or equal to the threshold number, rendering, in an independent rendering layer, on display content corresponding to respective rendering layers in the plurality of rendering layers, to obtain a rendering result; and
presenting the rendering result on the display screen.

12. An apparatus (400) for display processing, comprising:
a rendering layer determining module (410) configured to determine a plurality of rendering layers to be rendered on a display screen, each rendering layer corresponding to at least part of interface area in an application interface to be displayed;
a priority determining module (420) configured to determine, in response to the number of the plurality of rendering layers being greater than a threshold number, respective priorities of the plurality of rendering layers, the threshold number indicating an upper limit of the number of rendering layers that are allowed to be rendered within a predetermined period;
a rendering module (430) configured to perform rendering on the plurality of rendering layers within the predetermined period based on the respective priorities of the plurality of rendering layers to obtain a rendering result; and
a presenting module (440) configured to present the rendering result on the display screen.

13. An electronic device (500), comprising:
at least one processor; and
at least one memory (520), the at least one memory (520) being coupled to the at least one processor and storing instructions for execution by the at least one processor, the instructions, when executed by the at least one processor, causing the electronic device (500) to perform the method (200) of any of claims 1 to 11.

14. A computer-readable storage medium having computer-executable instructions stored thereon, the computer-executable instructions being executable by a processor to implement the method of any of claims 1 to 11.

15. A computer-executable instruction product, the computer-executable instruction product being tangibly stored in a computer storage medium and comprising computer-executable instructions that, when executed by a device, cause the device to perform the method (200) of any of claims 1 to 11.
